# EUROPÄISCHE PATENTSCHRIFT

(11) **EP 1 568 526 B1**
(45) Veröffentlichungstag und Bekanntmachung des Hinweises auf die Patenterteilung: **10.09.2008**
(21) Anmeldenummer: 05002744.0
(22) Anmeldetag: 10.02.2005
(51) Int. Cl.: B60J 1/20

(54) **Führungsloses Fensterrollo mit verbesserten Gleitern**
Non-guided roller blind with improved guide shoes
Store sans glissière avec des patins améliorés

(30) Priorität: 27.02.2004 DE 102004009482
(43) Veröffentlichungstag der Anmeldung: 31.08.2005
(60) Teilanmeldung: 07024575.8
(73) Patentinhaber: BOS GmbH & Co. KG, 73760 Ostfildern (DE)
(72) Erfinder: Starzmann, Michael, 73666 Baltmannsweiler (DE); Gassenheimer, Dieter, 71384 Weinstadt (DE); Walter, Herbert, 73061 Ebersbach (DE); Güsewell, Klaus, 73084 Salach (DE)
(74) Vertreter: Rüger, Barthelt & Abel Patentanwälte

(56) Entgegenhaltungen:
- EP-A- 1 426 548
- EP-A1- 0 953 464
- EP-A2- 0 240 747
- DE-A1- 19 835 257

## Beschreibung

Aus der EP 0 240 747 A2 A1 ist ein führungsloses Heckscheibenrollo für Kraftfahrzeuge bekannt. Das Rollo weist eine drehbar gelagerte Wickelwelle auf, an der mit einer Kante die trapezförmig zugeschnittene Rollobahn befestigt ist. Die andere, von der Wickelwelle abliegende Kante, ist mit einer Zugstange bzw. einem Auszugsprofil verbunden. Dieses Auszugsprofil sitzt an dem freien Ende von zwei Aufspannhebeln, die neben der Wickelwelle auf Scharnierachsen schwenkbar gelagert sind. Die Scharnierachsen sind rechtwinklig zu der Achse der Wickelwelle ausgerichtet.

Zum Aufspannen und Einfahren der Rollobahn sind zwei Antriebseinrichtungen vorgesehen. Die eine Antriebseinrichtung besteht in einem Federmotor, der in der Wickelwelle untergebracht ist und die Wickelwelle im Sinne des Aufwickelns der Rollobahn vorspannt. Die andere Betätigungs- und Antriebseinrichtung ist ein Getriebemotor, der auf seiner Ausgangswelle eine Kurbelscheibe trägt. Die Kurbelscheibe ist über Kuppelstangen mit den Aufspannhebeln verbunden. In der eingefahrenen Lage liegen die Aufspannhebel parallel zu der Wickelwelle und sie werden durch Ingangsetzen des Motors in eine Stellung bewegt, in der sie im Wesentlichen rechtwinklig zu der Wickelwelle stehen. Dabei gleiten die freien Enden der Aufspannhebel durch Nuten, die längs dem Auszugsprofil verlaufen. Das Ende der Aufspannhebel macht eine kombinierte Bewegung, und zwar eine Linearbewegung parallel zur Längserstreckung zu dem Auszugsprofil und außerdem eine Kipp- oder Schwenkbewegung. Um diese Freiheitsgerade zu ermöglichen, sitzt zwischen dem Auszugsprofil und dem Ende des Aufspannhebels ein Gleitkörper, der über ein Scharnier mit dem Aufspannhebel verbunden ist.

Der Kopf des Gleitkörpers hat eine zylindrische Gestalt, dessen Längsachse rechtwinkelig zu der Ebene der aufgespannten Rollobahn liegt. Die Führungsnut ist entsprechend gestaltet. Sie setzt sich aus einer im Querschnitt rechtwinkeligen Nutenkammer und einem Nutenschlitz zusammen, der neben einer Seitenwand der Nutenkammer angeordnet ist, so dass eine Wand der Nutenkammer glatt in die betreffende Wand des Nutenschlitzes übergeht.

Da der Federmotor ständig bestrebt ist die Rollobahn wieder einzufahren, übt die Rollobahn ein Kippmoment auf das Auszugsprofil aus, und zwar bezüglich einer Achse die parallel zu dem Auszugsprofil und damit parallel zur Wickelwelle liegt. Dieses Kippmoment wird von dem Kopf in die Führungsnut eingeleitet. Hierdurch wird der Kopf auf Knick belastet und verkantet in der Nutenkammer.

Es hat sich gezeigt, dass nach längerem Gebrauch die Gleitkörper in der Führungsnut beim Ein- und Ausfahren des Rollos nicht ganz gleichförmig, sondern etwas ruckartig laufen. Dies wird als unschön empfunden.

Aufgabe der Erfindung ist es deswegen ein Fensterrollo mit Aufspannhebeln zu schaffen, bei dem sichergestellt ist, dass auch über einen langen Betriebszeitraum die Gleitkörper ruckfrei durch die Führungsnut laufen.

Diese Aufgabe wird erfindungsgemäß durch ein Fensterrollos mit den Merkmalen des Anspruchs 1 gelöst.

Bei dem neuen Rollo wird die Rollobahn, wie aus dem Stand der Technik bekannt, mit Hilfe von zwei Aufspannhebeln in die aufgespannte Stellung gebracht, bzw. aus der aufgespannten Stellung kontrolliert in die eingefahrene Stellung überführt. Zumindest im Zwischenbereich übernehmen dabei die Aufspannhebel das Tragen der Rollobahn, denn sie sind zumindest in Richtung senkrecht zu der Ebene die durch die aufgespannte Rollobahn definiert ist, knick- und biegesteif.

Da in der Regel der Hub, den die Rollobahn beim Ausfahren zurücklegt, größer ist als die halbe Länge der Wickelwelle, ist für jeden Aufspannhebel eine eigene Führungsnut vorgesehen, da sich ihre freien Enden irgendwann im Verlauf der Schwenkbewegung einmal überkreuzen. Bei kürzeren Rollos würde eine einzige Nut ausreichen, in der beide Aufspannhebel laufen. Dies setzt allerdings voraus, dass die Enden der Aufspannhebel auch im eingefahrenen Zustand noch einen gewissen Abstand voneinander haben und nicht aneinander vorbei laufen.

Damit die Verbindung zwischen dem Aufspannhebel und dem Auszugsprofil mit Sicherheit beibehalten bleibt, sind die Führungsnuten in dem Auszugsprofil hinterschnittene Nuten. Die Nutenkammer ist in der lichten Weite größer als der Nutenschlitz, so dass ein darin geführter Gleitkörper nicht über den Schlitz aus der Kammer freikommen kann. Der Querschnitt der Nutenkammer ist an den Querschnitt eines Kopfes des Gleitkörpers angepasst. Der Gleitkörper selber ist über ein Scharnier mit dem Aufspannhebel verbunden.

Die Ruckfreiheit bei der Gleitbewegung wird erreicht, indem der Gleitkörper mit einem Schmierstoffreservoir versehen ist, wodurch ständig die Gleitfläche zwischen dem Gleitkörper und der Wand der Führungsnut geschmiert und dadurch der Reibkoeffizient niedrig gehalten wird.

Zweckmäßigerweise enthält das Auszugsprofil zwei Führungsnuten, wobei jedem Aufspannhebel eine Führungsnut zugeordnet ist. Auf diese Weise können die Aufspannhebel aneinander vorbeilaufen und es werden Auszugslängen erreicht, die größer sind als die halbe Länge der Wickelwelle.

Die unter Vorspannung stehende Rollobahn erzeugt ein Kippmoment des Auszugsprofils um dessen Längsachse. Um dieses Kippmoment in die Aufspannhebel einzuleiten, kann die Nutenkammer eine von der Kreisform abweichenden Querschnitt aufweisen.

Eine andere Möglichkeit besteht darin, neben dem Nutenschlitz und somit außerhalb der Führungsnut eine durchgehende Schulter vorzusehen, an der sich das Gleitelement abstützen kann. Im letzteren Fall sind die Punkte, die das Kippmoment aufnehmen räumlich weit voneinander entfernt, was die Kräfte vermindert, wenn das Kippmoment eingeleitet wird. Dafür ist der Bauraum etwas größer. Es steht im Belieben des Fachmanns sich für den einen oder den anderen Weg zu entscheiden.

Die Aufnahme des Kippmoments in der Nutenkammer wird begünstigt, wenn das Gleitelement mit einem Schmierstoffreservoir versehen ist. Dadurch wird der Reibkoeffizient vermindert und es kann eine ruckfreie Bewegung erreicht werden, obwohl die Anlagepunkte, die das Kippmoment in Längs- und in Querrichtung aufnehmen räumlich dicht beieinander liegen.

Ein weiteres Schmiermittelreservoir kann in der Nutenkammer selbst enthalten sein, indem dort mit Schmiermittel gefüllte Nuten vorgesehen sind, die in Längsrichtung der Nutenkammer verlaufen.

Das Gleitelement setzt sich im einfachsten Falle aus einem Kopf und einer Lasche zusammen, wobei der Querschnitt des Kopfes an den Querschnitt der jeweiligen Nutenkammer angepasst ist. Bei Verwendung einer zylindrischen Nutenkammer hat der Kopf entsprechenden Kreisquerschnitt und kann sich damit bezüglich der Längsachse der Führungsnut weitgehend kräftefrei einstellen, was einer Verklemmung vorbeugt.

Die vom Kopf ausgehende Lasche kann gleichzeitig als Scharnierlasche dienen, mit der das Gleitelement an dem betreffenden Aufspannhebel anscharniert ist.

Das Schmiermittelreservoir an dem Gleitelement kann einerseits durch die Verjüngung gebildet sein, die dem Kopf die hantelförmige Gestalt bildet, oder auch durch Schmiermittelnuten, die in dem Kopf ausgebildet sind und die nicht parallel zu der Bewegungsrichtung des Gleitelementes verlaufen. Durch die gekippte Anordnung der Nuten soll erreicht werden, dass das Schmiermittel die gesamte Wand der Nutenkammer benetzen kann.

Die Verwendung der Nuten ist nicht auf Gleitelemente beschränkt, bei denen der Kopf einen Kreisquerschnitt hat. Die Nuten lassen sich auch bei Gleitelementen einsetzen, bei denen der Kopf im Querschnitt profiliert, beispielsweise rechteckig oder quadratisch ist. Ebenso ist die Hantelform nicht auf Gleitelemente mit rotationssymetrischem Kopf beschränkt die Vorteile der Hantelgestalt kann auch bei Gleitelementen ausgenutzt werden, deren Kopf rechteckig oder quadratisch ist.

Das Volumen des Schmiermittelreservoirs wird vergrößert, wenn das Gleitelement im Bereich des Kopfes eine in Längsrichtung durchgehende Kammer enthält. Diese Kammer hat über wenigstens eine Bohrung Verbindung zur Außenoberfläche des Kopfes.

Im Übrigen sind Weiterbildungen der Erfindung Gegenstand von Unteransprüchen.

Beim Studium des erläuterten Ausführungsbeispiels wird ersichtlich, dass eine Reihe von Abwandlungen möglich sind, die im Belieben des Fachmanns stehen und die von den sonstigen technischen Randbedingungen beeinflusst werden.

In der Zeichnung ist ein Ausführungsbeispiel des Gegenstandes der Erfindung dargestellt. Es zeigen:
- Fig. 1: ein Kraftfahrzeug in einer schematischen Ansicht auf die Heckscheibe, mit teilweise aufgebrochener Hutablage unter Veranschaulichung des erfindungsgemäßen Fensterrollos;
- Fig. 2: ein Ende des Gehäuses des Fensterrollos unter Veranschaulichung der Lagerung und des Antriebs eines Aufspannhebels, in einer abgebrochenen perspektivischen Darstellung;
- Fig. 3: das Auszugsprofil des Fensterrollos nach Fig. 1 in einem Querschnitt rechtwinklig zur Längserstreckung, teilweise in einer Explosionsdarstellung;
- Fig. 4: eines der Gleitelemente nach Fig. 3 in einer Seitenansicht und
- Fig. 5: ein weiteres Ausführungsbeispiel für ein Gleitelement aus der Darstellung nach Fig. 3.

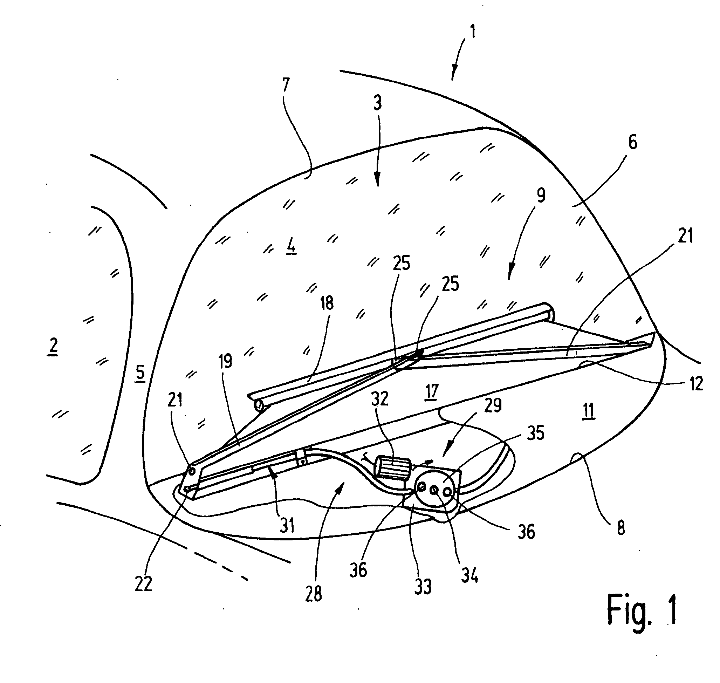

Fig. 1 zeigt in stark schematisierter Weise die Heckpartie eines Kraftfahrzeuges 1 in einer Ansicht von hinten. In der perspektivischen Darstellung ist ein linkes hinteres Seitenfenster 2 sowie ein Heckfenster 3 mit der eingesetzten üblicherweise gekrümmten Fensterscheibe 4 zu erkennen. Die Fensterscheibe 4 befindet sich zwischen zwei seitlichen C-Säulen 5 und 6 und wird oben von einer Dachhinterkante 7 und unten durch eine Kante 8 begrenzt.

Vor der Innenseite der Fensterscheibe 4 befindet sich ein Fensterrollo 9, das in einer teilweise ausgezogenen Stellung gezeigt ist.

Im Inneren des Fahrzeugs befindet sich vor dem Heckfenster 3 eine teilweise aufgebrochen veranschaulichte Hutablage 11, in der ein über nahezu die gesamte Breite der Hutablage 11 sich erstreckender Auslaufschlitz 12 enthalten ist. Die Hutablage 11 füllt den Bereich zwischen einer Rücksitzbank und dem Heckfenster 3.

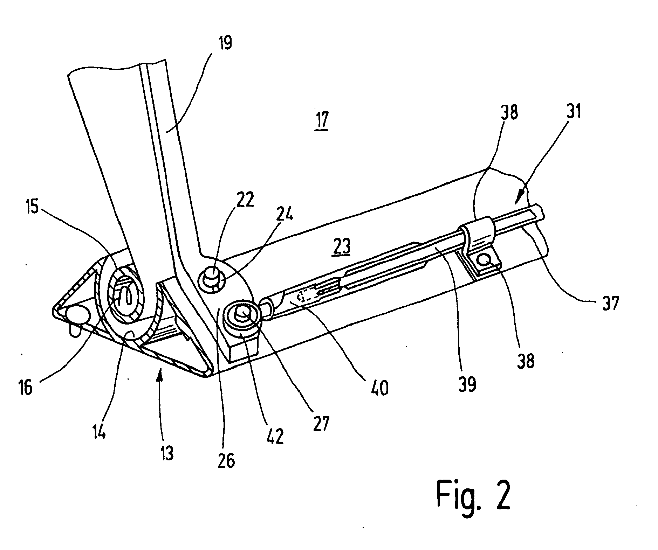

Wie die zusätzlich in Bezug genommene Figur 2 veranschaulicht, gehört zu dem Fensterrollo 9 ein unter der Hutablage 11 befestigtes Gehäuse 13 in Gestalt eines im Querschnitt etwa dreieckförmigen Strangpressprofils. In dem Gehäuse 13, das sich über die gesamte Breite des Fensterrollos 9 erstreckt, ist eine zylindrische nach oben offene Nut 14 enthalten, in der eine Wickelwelle 15 drehbar gelagert ist. Die Lagerung der Wickelwelle 15 geschieht auf Zapfen, die in nicht weiter gezeigten Endstücken des Gehäuses 13 befestigt sind.

Mittels einer verkürzten schematisch angedeuteten Wickelfeder 16, die einendes an dem benachbarten nicht veranschaulichten Gehäuseendstück verankert ist und anderenends in der Wickelwelle 15, wird die Wickelwelle 15 in einer Drehrichtung federvorgespannt. Die Schraubenfeder 16 dient als Federmotor.

An der Wickelwelle 15 ist mit einer Kante eine Rollobahn 17 befestigt, die etwa trapezförmig zugeschnitten ist.

Die von der Wickelwelle 15 abliegende und zu dieser parallel verlaufende Kante der Rollobahn 17 ist mit einem Auszugsprofil 18 verbunden, der gleichzeitig die Aufgabe hat, die betreffende Kante der Rollobahn 17 auszusteifen.

Die Rollobahn 17 führt wie die Figuren 1 und 2 zeigen, nach oben aus der zylindrischen Nut 14 heraus und von dort weiter durch den Auslaufschlitz 12.

Um die Rollobahn 17 aufzuspannen und aufgespannt zu halten, sind zwei Betätigungselemente in Gestalt von Aufspannhebeln 19 und 21 vorgesehen. Jeder der beiden Hebel 19 und 21 ist, wie der aufgebrochene Bereich in Fig. 1, bzw. das in Fig. 2 gezeigte linke Ende des Fensterrollos 9 erkennen lässt, mittels eines zugehörigen Schwenkzapfens 22 am jeweiligen Ende des Gehäuses 13 schwenkbar gelagert. Der Schwenkzapfen 22 ist auf einer bezogen auf das Kraftfahrzeug nach hinten weisenden planen Gehäusefläche 23 befestigt. Die Gehäusefläche 23 verläuft im eingebauten Zustand parallel zu einer durch die Heckscheibe 4 definierten Ebene. Auf diese Weise schwenken die beiden Hebel 19 und 21 in dieser besagten Ebene, und zwar im gegenläufigen Sinne, da jeder von ihnen an einem der beiden Enden des Gehäuses 13 gelagert ist.

Zur Drehlagerung ragt der Zapfen 22 durch eine entsprechende Bohrung in dem Hebel 19 bzw. 21, der mit Hilfe einer Krallenfeder 24 axial auf dem Zapfen 22 gesichert ist.

Das von dem Schwenkzapfen 22 abliegende Ende jedes der Hebel 19 und 21 ist gleitend mit dem Auszugsprofil 18 verbunden.

Um die Hebel 19 und 21 zu verschwenken, ist jeder der beiden Hebel 19 und 21, wie für den Hebel 19 zu erkennen, mit einer Hebelverlängerung 26 versehen, die sich, gesehen von dem Betätigungselement 19 her, über den Schwenkzapfen 22 in radialer Richtung hinaus erstreckt. Die Hebelverlängerung 26 trägt einen zu dem Zapfen 22 achsparallelen Kurbelzapfen 27.

Damit die beiden Schwenkhebel 19 und 21 im Sinne des Ein- und Ausfahrens der Rollobahn 17 verschwenkt werden können, ist eine Antriebseinrichtung 28 vorhanden, zu der ein Getriebemotor 29 sowie zwei flexible Koppelmittel 31 gehören.

Der Getriebemotor 29 setzt sich aus einem permanent erregten Gleichstrommotor 32 und einem Untersetzungsgetriebe 33 zusammen, auf dessen Ausgangswelle 34 drehfest eine Scheibe 35 sitzt, die zwei zu der Ausgangswelle 34 achsparallele Kurbelzapfen 36 trägt.

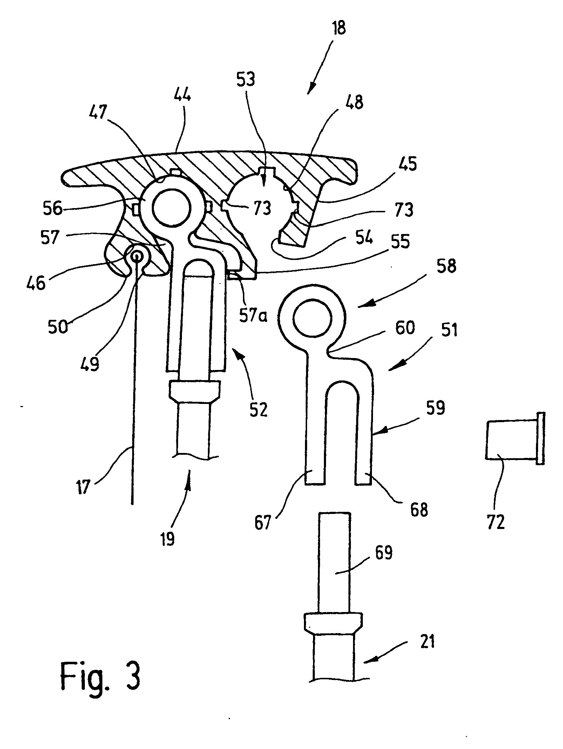

Die vergrößerte Darstellung aus Fig. 3 lässt den Aufbau des Koppelmittels 31 erkennen. Sie zeigt dasjenige Ende des Koppelmittels 31, das mit dem Betätigungshebel 19 verbunden ist.

Das Koppelmittel 31 weist eine wie bei Bowdenzügen übliche flexible schlauchförmige Hülle 37 auf, die gegebenenfalls durch eine Stahlspirale verstärkt ist. Die flexible Hülle 37 ist in der Nähe ihres betreffenden Endes mit Hilfe einer Schelle 38 auf dem Gehäuse 13 befestigt. Das andere Ende der Hülle 37 ist in ähnlicher Weise an dem Getriebe 33 verankert. Diese Verankerung ist jedoch aus Gründen der Übersichtlichkeit nicht weiter gezeigt. Sie sieht im wesentlichen genauso aus, wie dies in Fig. 3 für das hebelseitige Ende gezeigt ist.

In der Hülle 37 ist frei verschieblich eine Seele 39 untergebracht, die als Volldraht beispielsweise aus Kunststoff aufgeführt ist.

Um die Seele 39 mit dem Kurbelzapfen 27 zu verbinden, sitzt auf dem freien Ende der Seele 39 ein Stab 40, der eine zu dem Stab 40 koaxiale Sackbohrung 41 enthält. In der Sackbohrung 41 steckt das betreffende freie Ende der Seele 39. Nach dem Einstecken der Seele 39 ist der Stab im Bereich der Bohrung 41 gequetscht oder gecrimpt, damit eine unlösbare reibschlüssige Verbindung zwischen dem Stab 40 und der Seele 39 Zustande kommt.

Das von der Seele 39 abliegende Ende des Stabs 40 trägt eine Ringöse 42, die auf den Kurbelzapfen 27 aufgesteckt und dort mittels einer Krallenfeder 43 gesichert ist.

Die Verbindung der beiden Aufspannhebeln 19 und 21 mit dem Auszugsprofil 18 ergibt sich aus Fig. 3. Fig. 3 zeigt das Auszugsprofil 18 in einem Querschnitt. Es besteht im Wesentlichen aus einem Kunststoffextrusionsprofil, das, über die Länge gesehen, einen konstanten Querschnitt aufweist.

Das Auszugsprofil 18 bildet eine glatte Dachseite 44, die nach unten zu eine Verlängerung 45 aufweist, die im weitesten Sinne als im Querschnitt rechteckig angesehen werden kann. In dieser Verlängerung 45 befinden sich insgesamt drei Nuten 46, 47 und 48.

Die Nut 46 ist eine Kedernut und entsprechend hinterschnitten. Sie dient der Aufnahme eines Keders 49, der an der freien Kante der Rollobahn 17 angebracht ist, die sich im Abstand von der Wickelwelle 15 befindet. Die Kedernut 46 öffnet sich mit einem Nutenschlitz 50 von der Dachseite 44 weg.

Die Nuten 47 und 48 dienen als Führungsnuten für zugehörige Gleitelemente 51 und 52, die identisch gestaltet sind.

Die Führungsnut 48 setzt sich aus einer Nutenkammer 53 und einem nach unten zu offenen Führungsschlitz 54 zusammen. Wie die Fig. 3 erkennen lässt, ist die Weite des Schlitzes 54 geringer als der Durchmesser der Nutenkammer 53, die im gezeigten Falle einen Kreisquerschnitt hat. Der Nutenschlitz 54 zeigt nach unten. Neben ihm verläuft unterhalb des Schlitzes 54 eine Anlageschulter 55, die zu der Kedernut 46 hin angeordnet ist.

Einen ähnlichen Aufbau zeigt die Führungsnut 47. Auch sie setzt sich aus einer Nutenkammer 56 und einem Nutenschlitz 57 zusammen. Unterhalb des Schlitzes 57 befindet sich eine weitere Anlageschulter ohne Bezugszeichen, die ebenfalls zu der Kedernut 46 hin gelegen ist.

Die beiden Führungsnuten 47 und 48 laufen parallel zueinander in der gezeigten Form über die Länge des Auszugsprofils 18 durch.

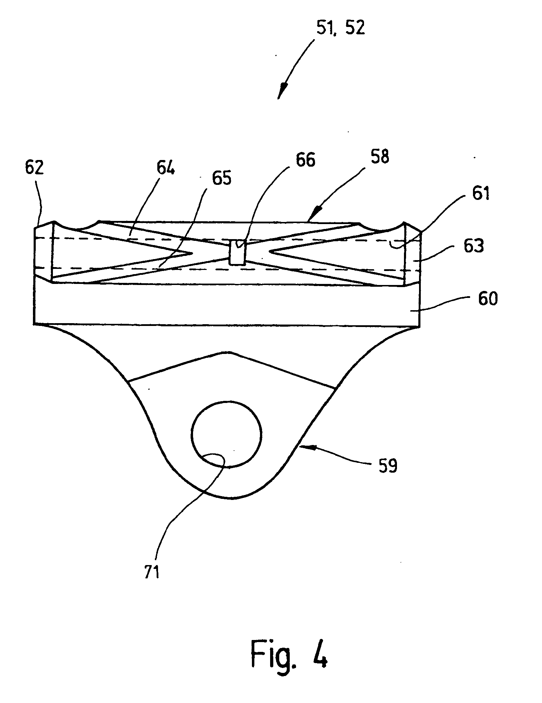

Die beiden Gleitelemente 51, 52 sind hinsichtlich der Gestalt identisch. Ihre Form ergibt sich aus der Darstellung von Fig. 3 und der Darstellung von Fig. 4.

Im Wesentlichen setzt sich jedes Gleitelement 51, 52 aus einem Kopf 58 und einer Lasche 59 zusammen, die mit dem Kopf 58 über ein leistenartiges Halsteil 60 verbunden ist. Der Kopf 58 gleitet durch die Nutkammer 53, bzw 56, während die Lasche 59 durch den jeweiligen Schlitz 54, 57 nach unten aus der Führungsnut 47, 48 herausragt.

Der Kopf 58 ist als zylindrisches Rohr ausgebildet mit einer durchgehenden Bohrung oder Kammer 61, während der Außendurchmesser an den Durchmesser der Nutenkammer 53 bzw. 56 angepasst ist. An den beiden stirnseitigen Enden ist der Kopf 58 bei 62 und 63 geringfügig angefast.

In der Außenumfangsfläche des Kopfes 58 befinden sich schräg verlaufenden Nuten 64 und 65. Die Nut 64 beginnt in der Nähe der Fasenfläche 62 und läuft schräg über die gezeigte Seite des Kopfes 58 zu der gegenüberliegenden Fasenfläche 63, und zwar in die Nähe leistenförmigen Halses 60. Die Nut 65 läuft in der entgegengesetzten Richtung von der Fasenfläche 63 an der Oberseite des Kopfes zu der Fasenfläche 62 in die Nähe des leistenförmigen Halses 60. Etwa in der Mitte, bezogen auf die Längserstreckung des Kopfes 58, schneiden sich diese beiden Nuten 64 und 65. An dieser Stelle befindet sich eine etwa rechteckförmige Öffnung 66, durch die eine Verbindung zwischen der Kammer 61 und den beiden Nuten 64 und 65 entsteht.

Auf der vom Betrachter abliegenden Seite des Gleitelementes 51, 52 befindet sich ein ähnliches Bild von schräg verlaufenden Nuten. Diese Nuten 64, 65, zusammen mit der Kammer 61, bilden ein Schmiermittelreservoir über das Schmiermittel an die Wand der Nutenkammer 53 oder 56 abgegeben werden kann. Damit das Schmiermittel sämtliche Bereiche der Wand erfasst, verlaufen die Nuten 64 und 65, wie gezeigt, schräg, d.h. nicht parallel zur Längsachse des Kopfes 58 bzw. der Bewegungsrichtung des Gleitelementes 51, 52 längs der betreffenden Führungsnut 47 oder 48.

Die Lasche 59 ist bei dem gezeigten Ausführungsbeispiel gegabelt, wodurch zwei Schenkel 67 und 68 entstehen, die ein entsprechend abgeflachtes Ende 69 des betreffenden Hebels 21 oder 19 übergreifen. Durch die beiden Schenkel 67 und 68 führt eine Durchgangsbohrung 71, in der ein Scharnierbolzen 72 steckt, der durch eine entsprechende weitere Bohrung in der abgeflachten Verlängerung 69 hindurch führt. Mit Hilfe des Scharnierbolzens 72 ist das Gleitelement 51 an dem freien Ende des Hebels 21 anscharniert und das Gleitelement 52 an dem freien Ende des Aufspannhebels 19. Die Scharnierbolzen 72 sind in dem betreffenden Gleitelement 51, 52 in bekannter Weise axial fixiert.

Die Funktionsweise des insoweit beschriebenen Rollos ist wie folgt:

Im eingefahrenen Zustand liegen die beiden Hebel 19 und 21 etwa parallel zu der Wickelwelle 15 unterhalb des Auslaufschlitzes 12. In dieser Position überdeckt das Auszugsprofil 18 mit dem Dachabschnitt 44 den Auszugsschlitz 12 zumindest im mittleren Bereich.

Wenn der Benutzer, ausgehend von dieser Stellung, das Rollo ausfahren will, setzt er den Getriebemotor 29 in Gang. Hierdurch werden die beiden Hebel 19 und 21 um ihre zugehörige Achse 22 herum geschwenkt und aus der Lage, in der sie im Wesentlichen parallel zu der Wickelwelle 15 stehend, in einer zu der Wickelwelle 15 angenähert rechtwinklige Position überführt. Dabei schwenken die beiden Hebel 19 und 21 durch den Schlitz 12 der Hutablage 11 nach oben. Hierbei heben sie das Auszugsprofil 18 an. Da an dem Auszugsprofil 18 über den Keder 79 die Rollobahn 17 befestigt ist, wird die Rollobahn 17 gegen die Wirkung des Federmotors 16 von der Wickelwelle 15 abgezogen. Sie wird vor dem Heckfenster 3 aufgespannt.

Zumindest während der Bewegung in die obere Endlage, übernehmen die beiden Hebel 19 und 21 auch diejenigen Kräfte, die senkrecht zu einer Ebene wirken, die durch die aufgespannte Rollobahnebene 17 definiert ist.

Beim Aufstellen oder Hochschwenken der Hebel 19, 21 laufen die Gleitelemente 51 und 52 aus einer Position, in der sie wechselweise jenseits der Mittel des Auszugsprofils 18, stehend in Richtung auf das betreffende Ende des Auszugsprofils 18. Die dabei auftretende Kippbewegung des betreffenden Hebels 19, 21 gegenüber der Längsachse des Auszugsprofils 18, wird über die Scharnieranordnung zwischen der Lasche 19 und dem Fortsatz 69 aufgenommen, denn die Scharnierachse in Gestalt des Scharnierbolzens 72 liegt senkrecht auf der Schwenkebene, in der sich die Hebel 19, 21 bewegen.

Beim Einfahren bewegen sich die Hebel 19, 21 in der entgegengesetzten Richtung, d.h. die Gleitelemente 51 und 52 laufen vom betreffenden Ende des Auszugsprofils 18 in Richtung auf die Mitte und je nach Dimensionierung der Scheibe über die Mitte hinaus, d.h. beim Überschreiten der Mitte liegen die Hebel 19, 21 in einer Zwischenstellung wie sie Fig. 1 erkennen lässt, gekreuzt zueinander. Im eingefahrenen Zustand befindet sich das freie Ende des einen Hebels, beispielsweise des Hebels 19 an einer Stelle, die irgendwo zwischen dem freien Ende des Hebels 21 und dessen Schwenklagers liegt.

Durch die Verwendung des Schmiermittelreservoirs in Gestalt der beidseitig angeordneten Nuten 64, 65 sowie der Kammer 61, die über die Öffnung 66 mit den Nuten 64, 65 in Verbindung steht, kann eine beträchtliche Menge an Schmiermittel bereit gehalten werden. Dieses Schmiermittel kann durch Kapillarwirkung, Ausschwitzen von Öl immer wieder an die Oberfläche der Nutenkammer 53 bzw. 56 geschafft werden. Dadurch wird der Reibbeiwert zwischen der betreffenden Führungsnut 47, 48 und dem Kopf 58 des jeweiligen Gleitelements 51, 52 gering gehalten. Ein ungleichförmiger Gleitlauf durch die betreffende Führungsnut 47, 48 wird mit Sicherheit ausgeschlossen.

Wenn das Auszugsprofil 18 nicht mehr auf den Rändern des Auszugschlitzes 12 aufliegt, erzeugt zwangsläufig die Vorspannung in der Rollobahn 17 ein Kippmoment. Die Kedernut 46 befindet sich seitlich versetzt gegenüber der Führungsnut 47 und auch seitlich versetzt gegenüber der Führungsnut 48, so dass die Vorspannung der Rollobahn 17 bestrebt ist das Auszugsprofil 18 um eine Achse zu kippen, die parallel zur Achse des Auszugsprofils 18 liegt.

Um dieses Kippmoment aufzunehmen und ein Verkanten des Auszugsprofils 18 zu vermeiden, sind die Schulter 55 und und die korespondierende Schulter bei dem Schlitz 57 vorhanden, mit denen sich das Auszugsprofil 18 an der Lasche 59 des jeweiligen GLeitelementes 51 oder 52 abstützt. Der Hals 60 läuft anlagefrei durch den jeweiligen Schlitz 54, 57 hindurch.

Zumindest in der Endstellung kann das Kippmoment nämlich nicht durch das Zusammenwirken der beiden Gleitelemente 51, 52 aufgenommen werden. Die Fig. 3 suggeriert insoweit eine falsche Vorstellung. Am Ende des Hubs stehen die beiden Gleitelemente 51 und 52 nämlich um die Länge des Auszugsprofils 18 voneinander entfernt. Aufgrund der Torsionsneigung des Auszugsprofils 18 würde sonst das Auszugsprofil 18, zumindest bezüglich der Führungsnut 48, tordiert sein.

Wenn ein Kippen vermieden werden soll, kann gegenüber der Schulter 57 noch eine weitere Führungsschulter 57a vorgesehen sein, wie dies in der Nähe von der Schulter 55 zu erkennen ist. Es ist auch möglich, den betreffenden Schlitzrand hierfür heranzuziehen, beispielsweise jene Fläche des Schlitzes, von der der Strich für das Bezugszeichen 54 ausgeht.

Bei der gezeigten Anordnung sind die Anlagepunkte, die das Kippmoment aufnehmen, relativ weit voneinander entfernt, so dass die Klemmkräfte die durch das Kippmoment hervorgerufen werden, klein sind. Dies trägt ebenfalls zu einem ruckfreien Lauf bei.

Eine weitere Möglichkeit ein Schmiermittelreservoir vorzusehen besteht darin, beispielsweise in der Wand der Nutenkammer 53 oder 58 in Längsrichtung verlaufende Schmiermittelnuten 73 vorzusehen.

Die Verwendung der Schmiermittelnuten ist nicht auf Gleitelemente 51, 52 beschränkt, bei denen der Kopf 58, wie gezeigt, einen zylindrischen Querschnitt hat. Es sind auch im Querschnitt profilierte Köpfe, beispielsweise quadratische, möglich, wenn die Schmiermittelnuten 64, 65 entsprechend darin ausgebildet sind.

Es bedarf keiner figürlichen Darstellung um zu begreifen, dass in diesem Falle die Nutenkammer 53 bzw. 56 einen entsprechenden profilierten Querschnitt, beispielsweise rechteckig oder quadratisch, aufweist.

Beim Lauf des Kopfes 58 des Gleitelementes 51 bzw. 52 durch die zugehörige Führungsnut 47, 48 entsteht ein Kippmoment an dem jeweiligen Gleitelement 51, 52 bezüglich einer Achse, die etwa durch die Öffnung 66 geht. Dadurch entstehen an den Enden des Kopfes 58 in der Nähe der Fasenflächen 62 und 63 erhöhte Anlagekräfte an der Wand der betreffenden Nutenkammer 56. Wenn diese Kräfte ein gegebenes Maß überschreiten, kann es nach bekanntem Zusammenhängen zu einer Selbstblockierung kommen. Dieser Zustand ist vom Abstand der Anlagepunkte, bezogen auf die Längserstreckung des Kopfes 58, und dem Reibbeiwert in bekannter Weise abhängig. Durch das Schmiermittel werden solle Effekte auch dann vermieden, wenn im Laufe der Zeit durch Abnutzung die Anlagepunkte des Kopfes 58 an der Wand der Nutenkammer 53, 56 immer näher aneinander heranrücken.

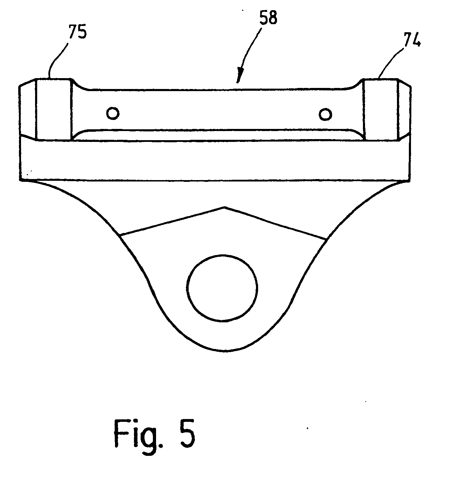

Eine andere Möglichkeit diesen schädlichen Einfluss zu vermeiden zeigt die Ausführungsform nach Fig. 5. Bei dieser Ausführungsform ist der Kopf 58 im Bereich zwischen den Enden über ein beträchtliches Stück, beispielsweise ungefähr 70% der Länge des Kopfes 58, eingeschnürt. Lediglich an den äußeren Enden bei 74 und 75 hat der Kopf 58 den Durchmesser, entsprechend dem Durchmesser der Nutenkammer 53, 56. Der Kopf 58 bekommt dadurch in der Seitenansicht das Aussehen einer Hantel oder eines Knochens.

Auch bei fortschreitender Abnutzung bleiben deswegen die Anlagepunkte entsprechend weit voneinander entfernt. Darüber hinaus lässt sich der eingeschnürte Bereich zwischen den Enden 74 und 75 auch als Schmiermittelreservoir heranziehen.

Die voneinander beabstandeten verdickten Enden des Kopfes 58 gestatten außerdem einen klemmfreien Lauf in einem Auszugsprofil 18, das nicht, wie dargestellt, exakt gerade, sondern leicht gekrümmt verläuft, damit sie in der oberen Stellung besser den gekrümmten Verlauf der Heckscheibe 3 folgt.

Die Erfindung ist in Verbindung mit einem Heckscheibenrollo veranschaulicht. Die Erfindung ist nicht auf die Verwendung von führungsschienenlosen Heckscheibenrollos beschränkt, wie die ohne weiteres einleuchtet. Sie ist in gleicher Weise auch auf Rollos anwendbar, die nach dem gleichen Prinzip arbeiten und beispielsweise an den Seitenscheiben angebracht sind, oder Rollos, die gleichzeitig die Funktion eines Trenngitters haben um den Fahrgastraum von einem Laderaum abzuteilen.

Eine Rolloanordnung weist Aufspannhebel auf, um die Rollobahn von der Wickelwelle abzuziehen und aufgespannt zu halten. Die Aufspannhebel sind gelenkig mit Gleitelementen versehen, die durch zugehörige Führungsnuten in dem Auszugsprofil gleiten. Um einen klemm- und ruckfreien Lauf zu gewährleisten, können diese Gleitelemente mit einem Schmiermittelreservoir versehen sein, eine hantelförmige Gestalt haben oder zylindrisch ausgebildet sein, wobei auch Kombinationen der Maßnahmen möglich sind.

## Patentansprüche

1. Fensterrollo (9) für Fenster (3) von Kraftfahrzeugen, insbesondere für Heckscheiben,
mit einer ortsfest drehbar gelagerten Wickelwelle (15),
mit einer Rollobahn (17), die zwei zueinander parallele Kanten (49) aufweist, von denen eine an der Wickelwelle (15) befestigt ist,
mit einer ersten Antriebseinrichtung (16), mittels derer die Wickelwelle (15), zumindest in Aufwickelrichtung, der Rollobahn (17) betätigbar ist,
mit einer Zugstange (18), die an der anderen Kante (49) der Rollobahn (17) befestigt ist und die wenigstens eine in ihrer Längsrichtung verlaufende Führungsnut (47,48) enthält, wobei sich der Querschnitt der Führungsnut (47,48) aus einer Nutenkammer (53,56) und einem Nutenschlitz (54,57) zusammensetzt, dessen lichte Weite kleiner ist als die lichte Weite der Nutenkammer (53,56),
mit zwei Aufspannhebeln (19,21), die mittels zugehöriger und voneinander beabstandeter Lager (22) bei der Wickelwelle (15) ortsfest bezüglich Achsen schwenkbar gelagert sind, die zu der Wickelwelle (15) rechtwinkelig verlaufen,
mit einer zweiten Antriebseinrichtung (28), die mit den Aufspannhebeln (19,21) gekuppelt ist, um die Aufspannhebel (19,21) aus einer ersten Stellung, in der die Zugstange (18) der Wickelwelle (15) benachbart ist, in eine zweite Stellung zu überführen, in der die Zugstange (18) von der Wickelwelle (15) weiter entfernt ist,
wobei jeder Aufspannhebel (19,21) gelenkig mit einem zugehörigen Gleitelement (51,52) verbunden ist, das in der zugehörigen Führungsnut (47,48) verschieblich sitzt und der mit einem Schmiermittelreservoir (61,64,65) versehen ist.

2. Fensterrollo nach Anspruch 1, **dadurch gekennzeichnet, dass** die Zugstange (18) zwei parallel zueinander verlaufende Führungsnuten (47,48) enthält.

3. Fensterrollo nach Anspruch 1, **dadurch gekennzeichnet, dass** die Nutenkammer (53,56) einen von der Kreisform abweichenden Querschnitt aufweist um das von der Rollobahn (17) ausgehende Kippmoment der Zugstange (18) um eine zur der Wickelwelle (17) parallele Achse auf den Aufspannhebel (19,21) zu übertragen.

4. Fensterrollo nach Anspruch 1, **dadurch gekennzeichnet, dass** neben dem Nutenschlitz (47,48) eine Anlageschulter (55,57) im Abstand zu dem Nutenschlitz (54) verläuft, um das von der Rollobahn (17) auf die Zugstange (18) ausgeübte Kippmoment bezüglich einer zu der Zugstange (18) parallel verlaufenden Achse auf den Aufspannhebel (19,21) zu übertragen.

5. Fensterrollo nach Anspruch 1, **dadurch gekennzeichnet, dass** die Nutenkammer (53,56) wenigstens ein zusätzliches nutartig ausgebildetes Schmiermittelreservoir (73) aufweist, das in Längsrichtung der Nutenkammer (53,56) verläuft.

6. Fensterrollo nach Anspruch 1, **dadurch gekennzeichnet, dass** der Gleitelement (51,52) einen Kopf (58) und eine von dem Kopf (58) ausgehende Lasche (59) aufweist, die mit dem zugehörigen Aufspannhebel (19,21) scharnierartig verbunden ist.

7. Fensterrollo nach Anspruch 1, **dadurch gekennzeichnet, dass** die Scharnierachse im Wesentlichen parallel zu der Schwenkachse (22) des Aufspannhebels (19,21) verläuft.

8. Fensterrollo nach Anspruch 1, **dadurch gekennzeichnet, dass** der Kopf (58) des Gleitelements (51,52) eine Länge, gesehen in Richtung parallel zu der Längserstreckung der Führungsnut (47,48) aufweist, die wenigstens zweimal so groß ist, wie die größte Querschnittsabmessung der Nutenkammer (53,56).

9. Fensterrollo nach Anspruch 1, **dadurch gekennzeichnet, dass** der Kopf (58) des Gleitelements (51,52) in der Seitenansicht senkrecht zu der Längserstreckung der Führungsnut (47,48), zumindest angenähert hantelförmig derart, dass er in seinem mittleren Bereich zwischen Endabschnitten (74,75) verjüngt ist.

10. Fensterrollo nach Anspruch 9, **dadurch gekennzeichnet, dass** die Verjüngung das Schmiermittelreservoir bildet.

11. Fensterrollo nach Anspruch 6, **dadurch gekennzeichnet, dass** der Kopf (58) des Gleitelements (51,52) an der Außenseite mit wenigstens einer Nut (64,65) versehen ist, die nicht parallel zu der Bewegungsrichtung des Gleitelements (51,52) in der Führungsnut (47,48) verläuft und die als Schmiermittelreservoir dient.

12. Fensterrollo nach Anspruch 6, **dadurch gekennzeichnet, dass** der Kopf (58) des Gleitelements (51,52) eine in Längsrichtung durchlaufende Kammer (61) aufweist, die als Schmiermittelreservoir dient und die über radiale Öffnungen (66) mit der Außenumfangsfläche des Kopfes (58) des Gleitelements (51,52) in Verbindung steht.

13. Fensterrollo nach Anspruch 6, **dadurch gekennzeichnet, dass** die Lasche (59) als einfache plattenförmige Lasche ausgebildet ist.

14. Fensterrollo nach Anspruch 6, **dadurch gekennzeichnet, dass** die Lasche (59) gegabelt ist.

15. Fensterrollo nach Anspruch 1, **dadurch gekennzeichnet, dass** die erste Antriebseinrichtung (16) von einem Federmotor gebildet ist.

16. Fensterrollo nach Anspruch 1, **dadurch gekennzeichnet, dass** die erste Antriebseinrichtung von einem Elektromotor gebildet ist.

17. Fensterrollo nach Anspruch 1, **dadurch gekennzeichnet, dass** die zweite Antriebseinrichtung wenigstens eine Feder umfasst, durch die die Aufspannhebel (19,21) in Richtung auf das Ausfahren der Rollobahn (17) vorgespannt sind.

18. Fensterrollo nach Anspruch 1, **dadurch gekennzeichnet, dass** die zweite Antriebseinrichtung (28) einen Getriebemotor umfasst.

19. Fensterrollo nach Anspruch 1, **dadurch gekennzeichnet, dass** jeder Aufspannhebel (19,21) als zweiarmiger Hebel ausgeführt ist, von dem ein Arm mit dem Auszugsprofil (18) und der andere Arm mit der Betätigungseinrichtung (28) gekuppelt ist.

## Claims

1. Window roller blind (9) for windows (3) of motor vehicles, in particular for rear windows,
with a fixed rotatably disposed winding shaft (15),
with a blind sheet (17), which has two parallel edges (49), one of which is fastened to the winding shaft (15),
with a first drive means (16), by means of which the winding shaft (15) can be operated in at least the wind-up direction of the blind sheet (17),
with a pull rod (18), which is fastened to the other edge (49) of the blind sheet (17) and which contains at least one guide groove (47, 48) running in its longitudinal direction, wherein the cross-section of the guide groove (47, 48) is composed of a groove chamber (53, 56) and a groove slot (54, 57), the width of which is smaller than the width of the groove chamber (53, 56),
with two clamping levers (19, 21), which are disposed to swivel by means of associated spaced bearings (22) at axes fixed relative to the winding shaft (15), which run at right angles to the winding shaft (15),
with a second drive means (28), which is coupled to the clamping levers (19, 21) in order to move the clamping levers (19, 21) out of a first position, in which the pull rod (18) is adjacent to the winding shaft (15), into a second position, in which the pull rod (18) is further remote from the winding shaft (15),
wherein each clamping lever (19, 21) is pivoted to an associated slide element (51, 52), which displaceably sits in the associated guide groove (47, 48) and which is provided with a lubricant reservoir (61, 64, 65).

2. Window roller blind according to claim 1, **characterised in that** the pull rod (18) contains two guide grooves (47, 48) running parallel to one another.

3. Window roller blind according to claim 1, **characterised in that** the groove chamber (53, 56) has a cross-section deviating from the circular form in order to transfer the tilting moment of the pull rod (18) coming from the blind sheet (17) around an axis parallel to the winding shaft (17?) onto the clamping lever (19, 21).

4. Window roller blind according to claim 1, **characterised in that** beside the groove slot (47, 48) an abutment shoulder (55, 57) runs at a distance from the groove slot (54) in order to transfer the tilting moment exerted by the blind sheet (17) on the pull rod (18) relative to an axis running parallel to the pull rod (18) onto the clamping lever (19, 21).

5. Window roller blind according to claim 1, **characterised in that** the groove chamber (53, 56) has at least one additional groove-like lubricant reservoir (73), which runs in the longitudinal direction of the groove chamber (53, 56).

6. Window roller blind according to claim 1, **characterised in that** the slide element (51, 52) has a head (58) and a bar (59) extending from the head (58), which is connected to the associated clamping lever (19, 21) in a hinge-like manner.

7. Window roller blind according to claim 1, **characterised in that** the hinge axis runs substantially parallel to the swivel axis (22) of the clamping lever (19, 21).

8. Window roller blind according to claim 1, **characterised in that** the head (58) of the slide element (51, 52) has a length, viewed in a direction parallel to the longitudinal extent of the guide groove (47, 48), which is at least twice the size of the largest cross-sectional dimension of the groove chamber (53, 56).

9. Window roller blind according to claim 1, **characterised in that**, in side view perpendicularly to the longitudinal extent of the guide groove (47, 48), the head (58) of the slide element (51, 52) is at least approximately dumbbellshaped such that it is tapered in its central region between end sections (74, 75).

10. Window roller blind according to claim 9, **characterised in that** the tapered area forms the lubricant reservoir.

11. Window roller blind according to claim 6, **characterised in that** the head (58) of the slide element (51, 52) is provided on the outside with at least one groove (64, 65), which does not run parallel to the direction of movement of the slide element (51, 52) in the guide groove (47, 48) and which serves as lubricant reservoir.

12. Window roller blind according to claim 6, **characterised in that** the head (58) of the slide element (51, 52) has a chamber (61) running through in the longitudinal direction, which serves as lubricant reservoir and which connects to the outer peripheral face of the head (58) of the slide element (51, 52) via radial openings (66).

13. Window roller blind according to claim 6, **characterised in that** the bar (59) is configured as a simple plate-shaped bar.

14. Window roller blind according to claim 6, **characterised in that** the bar (59) is forked.

15. Window roller blind according to claim 1, **characterised in that** the first drive means (16) is formed by a spring motor.

16. Window roller blind according to claim 1, **characterised in that** the first drive means is formed by an electric motor.

17. Window roller blind according to claim 1**, characterised in that** the second drive means comprises at least one spring, by means of which the clamping levers (19, 21) are biased in the direction of extending the blind sheet (17).

18. Window roller blind according to claim 1, **characterised in that** the second drive means (28) comprises a geared motor.

19. Window roller blind according to claim 1, **characterised in that** each clamping lever (19, 21) is configured as a two-armed lever, one arm of which being coupled to the pull-out profile (18) and the other arm being coupled to the operating means (28).

## Revendications

1. Store sans glissière (9) pour des fenêtres (3) de véhicules automobiles, notamment des lunettes arrière, qui comporte :
- un arbre d'enroulement (15) pouvant seulement tourner,
- une bande de store (17) présentant deux bords parallèles (49) dont l'un est fixé à l'arbre d'enroulement (15),
- un premier dispositif d'entraînement (16) par lequel l'arbre d'enroulement (15) peut être actionné au moins dans le sens d'enroulement de la bande de store (17),
- une tige de traction (18) qui est fixée à l'autre bord (49) de la bande de store (17) et présente au moins une rainure de guidage (47, 48) disposée selon la direction longitudinale et présentant une section composée d'une chambre de rainure (53, 56) et d'une fente de rainure (54, 57) dont la largeur interne est inférieure à celle de la chambre de rainure (53, 56),
- deux leviers de tension (19, 21) qui sont montés sur des paliers (22) espacés l'un de l'autre et disposés sur l'arbre d'enroulement (15) de manière que les leviers peuvent basculer autour d'axes fixes qui sont perpendiculaires à cet arbre,
- un second dispositif d'entraînement (28) qui est accouplé aux leviers de tension (19, 21) de manière à faire passer ceux-ci d'une première position dans laquelle la tige de traction (18) est proche de l'arbre d'enroulement (15), à une seconde position dans laquelle cette tige (18) est éloignée de l'arbre (15),
étant précisé que le levier de tension (19, 21) est articulé à un élément de glissement (51, 52) correspondant qui est monté coulissant dans la rainure de guidage (47, 48) correspondante et est équipé d'un réservoir d'agent de lubrification (61, 64, 65).

2. Store à glissière selon la revendication 1, **caractérisé en ce que** la tige de traction (18) présente deux rainures de guidage (47, 48) parallèles.

3. Store à glissière selon la revendication 1, **caractérisé en ce que** la chambre de rainure (53, 56) présente une section dont la forme s'écarte de celle d'un cercle afin de transmettre aux leviers de tension (19, 21) le couple de basculement de la tige de traction (18) produit par la bande de store (17) autour d'un axe parallèle à l'arbre d'enroulement (17).

4. Store à glissière selon la revendication 1, **caractérisé en ce qu'**à côté de la fente de rainure (47, 48) et à une certaine distance de celle-ci s'étend un épaulement de butée (55, 57) pour transmettre aux leviers de tension (19, 21) le couple de basculement exercé par la bande de store (17) sur la tige de traction (18) par rapport à un axe parallèle à celle-ci.

5. Store à glissière selon la revendication 1, **caractérisé en ce que** la chambre à rainure (53, 56) présente au moins un réservoir d'agent de lubrification (73) supplémentaire sous la forme d'une rainure disposée selon la direction longitudinale de cette chambre (53, 56).

6. Store à glissière selon la revendication 1, **caractérisé en ce que** l'élément de glissement (51) présente une tête (58) et, partant de celle-ci, une patte (59) qui est reliée par une articulation à charnière au levier de tension (19, 21) correspondant.

7. Store à glissière selon la revendications 1, **caractérisé en ce que** l'axe de la charnière est essentiellement parallèle à l'axe de basculement (22) du levier de tension (19, 21).

8. Store à glissière selon la revendication 1, **caractérisé en ce que** la tête (58) de l'élément de glissement (51, 52), observée parallèlement à la direction longitudinale de la rainure de guidage (47, 48) présente une longueur qui est au moins deux fois celle de la plus grande dimension en section transversale de la chambre de rainure (53, 56).

9. Store à glissière selon la revendication 1, **caractérisé en ce que** la tête (58) de l'élément de glissement (51, 52), observée de côté perpendiculairement à la direction longitudinale de la rainure de guidage (47, 48) a au moins approximativement la forme d'une haltère de sorte qu'elle présente un rétrécissement dans sa zone médiane entre ses deux zones d'extrémité (74, 75).

10. Store à glissière selon la revendication 9, **caractérisé en ce que** le rétrécissement constitue le réservoir d'agent de lubrification.

11. Store à glissière selon la revendication 6, **caractérisé en ce que** la tête (58) de l'élément de glissement (51, 52) présente sur sa surface externe au moins une rainure (64, 65) qui n'est pas parallèle à la direction de déplacement de l'élément de glissement (51, 52) dans la rainure de guidage (47, 48) et qui sert de réservoir d'agent de lubrification.

12. Store à glissière selon la revendication 6, **caractérisé en ce que** la tête (58) de l'élément de glissement (51, 52) présente une chambre (61) s'étendant en direction longitudinale, qui sert de réservoir d'agent de lubrification et qui est reliée par des ouvertures radiales (66) à la surface externe de la tête (58) de l'élément de glissement (51, 52).

13. Store à glissière selon la revendication 6, **caractérisé en ce que** la patte (59) est une simple plaque plate.

14. Store à glissière selon la revendication 6, **caractérisé en ce que** la patte (59) a la forme d'une fourche.

15. Store à glissière selon la revendication 1, **caractérisé en ce que** le premier dispositif d'entraînement (16) est constitué par un moteur à ressort.

16. Store à glissière selon la revendication 1, **caractérisé en ce que** le premier dispositif d'entraînement (16) est constitué par un moteur électrique.

17. Store à glissière selon la revendication 1, **caractérisé en ce que** le second dispositif d'entraînement comprend au moins un ressort qui précontraint les leviers de tension (19, 21) dans le sens de déroulement de la bande de store (17).

18. Store à glissière selon la revendication 1, **caractérisé en ce que** le second dispositif d'entraînement (28) est un motoréducteur.

19. Store à glissière selon la revendication 1, **caractérisé en ce que** chaque levier de tension (19, 21) est un levier à deux bras dont l'un est accouplé au profilé de traction (18) tandis que l'autre bras est accouplé au dispositif d'entraînement (28).
